# EUROPEAN PATENT SPECIFICATION

(11) **EP 1 442 577 B1**
(45) Date of publication and mention of the grant of the patent: **30.05.2012**
(21) Application number: 02778611.0
(22) Date of filing: 18.10.2002
(51) Int. Cl.: H04L 29/06, H04L 12/56, H04L 12/46, H04B 7/185

(54) **SYSTEM AND METHOD FOR TOKEN-BASED PPP FRAGMENT SCHEDULING**
SYSTEM UND VERFAHREN ZUR AUF TOKEN BASIERENDER PPP FRAGMENTIERABLAUFPLANUNG
SYSTEME ET PROCEDE DE PLANIFICATION DE FRAGMENTS PPP A BASE DE JETONS

(30) Priority: 25.10.2001 US 335680 P
(43) Date of publication of application: 04.08.2004
(73) Proprietor: Qualcomm, Incorporated, San Diego, CA 92121 (US)
(72) Inventor: SINGHAI, Sandeep, San Diego, CA 92122 (US); SAIDI, Ben A., San Diego, CA 92128 (US)
(74) Representative: Heselberger, Johannes
(86) International application number: PCT/US2002/033346
(87) International publication number: WO 2003/036912

(56) References cited:
- WO-A-01/33772
- WO-A-01/41397
- US-B1- 6 212 190
- SKLOWER K. ET ALL: "RFC 1717 The Multilink Protocol (MP)" 1 November 1994 (1994-11-01) , IETF , NETWORK WORKING GROUP XP002228512 section 2 - section 4 figures 1,2

## Description

### I. Field Of The Invention

The present invention relates generally to multilink packetized data transmission.

### II. Background Of The Invention

Data increasingly is communicated between computers, such as between a server and a user computer, using Internet Protocol (IP)-based principles. An example of a protocol that can be used to carry IP-based data is point-to-point protocol (PPP) framing of IP packets. That is, IP data packets can be communicated using PPP as disclosed for example in the IETF standard RFC1717.

PPP can be used not only for communicating IP packets over wired portions of the Internet, but also to communicate data over wireless transmission paths to user computers that employ wireless communication principles such as but not limited to code division multiple access (CDMA) technology, GSM, wideband CDMA, and other wireless technologies.

As disclosed in the above-referenced prior art, to increase bandwidth (i.e., to increase the amount of data per unit time that can be communicated between transmitter and receiver) and decrease latency, the IP packets being transmitted can be partitioned into fragments, with the fragments being sent in parallel over multiple links that are established between the transmitter and the receiver. The fragments are recombined at the receiver. The fragments are allocated to the links in round robin fashion, i.e., the first fragment is sent on the first link, the second fragment is sent on the second link, and so on.

The present invention critically observes that the round robin allocation of fragments can give rise to lost fragments. To explain, consider that the number of links typically is equal to the number of fragments per packet, and further consider that the last fragment of each packet is generally smaller than the others, representing, as it does, a remainder. In the presence of round robin fragment allocation (also referred to as round robin scheduling), this means that the last, smallest fragment of every packet is always scheduled on the same link, essentially rendering these links under-utilized, with the under-utilization being cumulative, i.e., it becomes progressively worse.

The smaller fragment, although having a higher sequence number than the fragments ahead of it in the packet, can arrive at the receiver first, where it is held pending arrival of the remaining fragments of the packet. Were the effects of link under-utilization not cumulative, this would not be a problem because systems typically will hold early-arriving fragments for a limited period. As observed above, however, when using round robin scheduling with the number of links being a multiple of the number of fragments per packet and with the last fragment of a packet being smaller than the other fragments, the effects of under-utilization are cumulative. As a consequence, the difference in arrival times of the smallest fragments vis-a-vis the other fragments of their packets can exceed the data hold time employed by the system, after the elapse of which the held fragment is flushed and, hence, lost. Such lost fragments result in the periodic loss of packets, with the system incorrectly regarding the loss of packets as being due to congestion.

Having made these critical observations, the solution below is provided.

### SUMMARY OF THE INVENTION

A method for communicating data that is arranged in packets includes providing plural links between a transmitter and a receiver, and allocating capacity indicators, such as tokens, to each link. Each packet is partitioned into plural fragments. The capacity indicators (e.g., tokens) are used to associate the fragments with the links. Specifically, each fragment is associated with the link having a highest remaining capacity as indicated by the tokens at the time the fragment is scheduled. In this way, load balancing among the links is achieved, reducing the likelihood of too-early fragment arrival at the receiver and concomitant fragment loss.

In preferred non-limiting embodiments, the token or tokens associated with a link are decremented by an amount representative of the size of a fragment when the fragment has been assigned to the link. Essentially, the tokens of a link represent its current capacity as perceived by the system.

In another aspect, a transmitter that transmits packetized data in an IP protocol includes a controller. The controller receives packets of data and partitions the packets into fragments for transmission over multiple wireless links. Each fragment is scheduled for transmission on one of the wireless links based on a non-round robin allocation policy. The present policy can be referred to as a load balancing policy.

In still another aspect, a system for packetized data transmission includes means for partitioning data packets into fragments, and means for scheduling the fragments among plural communication links based on current perceived capacities of the links. Means are provided for transmitting fragments of a packet in parallel with each other over the links.

These and other objects and advantages are provided by a method, system and mobile terminal according to the appended claims 1,9 and 26. Preferred embodiments are defined in the dependent claims.

### BRIEF DESCRIPTION OF THE DRAWINGS

Figure 1 is a block diagram of one exemplary non-limiting communication system that can use the present PPP multilink principles; and

Figure 2 is a flow chart of the present logic.

### DETAILED DESCRIPTION OF THE PREFERRED EMBODIMENT

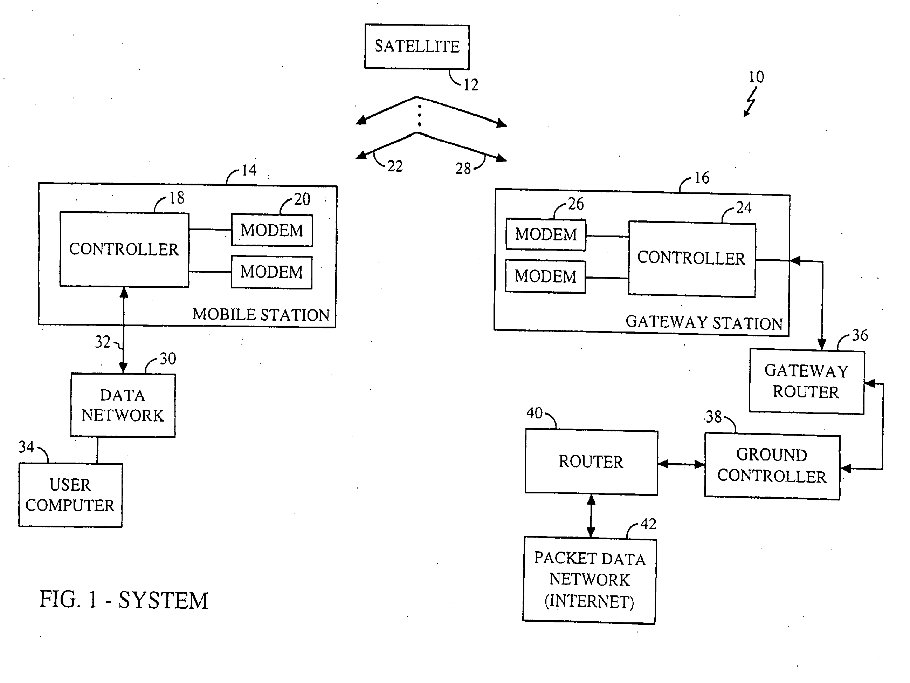

Referring initially to Figure 1, a communication system is shown, generally designated 10, that can include one or more satellites 12 for facilitating data communication between one or more mobile stations 14 (that may be carried on a moving platform) and one or more land-based gateway stations 16. The system 10 can be implemented in accordance with the well known Globalstar system. While Figure 1 shows that satellite communication can be used, it is to be understood that the multilink packetized data communication principles disclosed herein apply generally to any multilink packetized data communication system, e.g., multiple ISDN bearer channels. In an exemplary embodiment, the packetized data principles used follow Internet Protocol (IP) principles and more particularly, though not exclusively, use point-to-point protocol (PPP) principles.

Continuing now with a description of the exemplary non-limiting system 10 shown in Figure 1, a soft transfer (handoff) process between satellites 12, and also between individual ones of plural (e.g., sixteen) beams transmitted by each satellite, provides unbroken communications via a spread spectrum (SS), code division multiple access (CDMA) technique. The presently preferred SS-CDMA technique is similar to the TIA/EIA Interim Standard, "Mobile Station-Base Station Compatibility Standard for Dual-Mode Wideband Spread Spectrum Cellular System" TIA/EIA/IS-95, July 1993, although other spread spectrum and CDMA techniques and protocols, or even some types of Time Division Multiple Access (TDMA) systems can be employed. In addition to CDMA cellular systems described in the Telecommunications Industry Association/Electronic Industries Association (TIA/EIA) Standard IS-95, other wireless systems that can be used include combined AMPS & CDMA systems described in the TIA/EIA Standard IS-98. Still other communications systems are described in the International Mobile Telecommunications System 2000/Universal Mobile Telecommunications System or IMT-2000/UM standards, covering what are commonly referred to as wideband CDMA (WCDMA), cdma2000 (such as cdma2000 1x-rxtt cdma2000 1x, 3x, or MC standards, for example) or TDSCDMA. GSM principles may also be used. Satellite-based communication systems also utilize these or similar known standards.

As shown in Figure 1, each mobile station 14 can include one or more controllers 18 that control plural modems 20 for communicating along respective links 22 with the satellite 12. Likewise, the gateway station 16 includes one or more controllers 24 that control plural modems 26 for communicating along respective links 28 with the satellite 12.

It is to be understood that the mobile stations 14 may be capable of operating in a full duplex mode and communicate via, by example, L-band RF links (uplink or return link) and S-band RF links (downlink or forward link) through return and forward satellite transponders. The return L band RF links may operate within a frequency range of 1.61 GHz to 1.625 GHz, a bandwidth of 16.5 MHz, and can be modulated with packetized digital voice signals and/or data signals in accordance with the preferred spread spectrum technique. The forward S band RF links may operate within a frequency range of 2.485 GHz to 2.5 GHz, and a bandwidth of 16.5 MHz. The forward RF links can also be modulated with packetized digital voice signals and/or data signals in accordance with the spread spectrum technique. The 16.5 MHz bandwidth of the forward link can be partitioned into, e.g., sixteen beams with thirteen sub-beams effectively forming two hundred eight FDM channels, each further accommodating around one hundred twenty eight code channels, with one user being assigned per forward link code channel, plus pilot signals, and so forth. The return link may have various bandwidths, and a given mobile station may or may not be assigned a different channel than the channel assigned on the forward link.

Moreover, the gateway stations 16 may communicate with the satellite 12 via, by example, a full duplex C band RF link (forward link (to the satellite), return link (from the satellite)) that operates within a range of frequencies generally above three GHz and preferably in the C-band. The C-band RF links bi-directionally convey the communication feeder links, and also convey satellite commands to the satellites and telemetry information from the satellites. The forward feeder link may operate in the band of 5 GHz to 5.25 GHz, while the return feeder link may operate in the band of 6.875 GHz to 7.075 GHz. As an example, several thousand full duplex communications may occur through a given one of the satellites 12. In accordance with a feature of the system 10, two or more satellites 12 may each convey the same communication between a given mobile station 12 and the gateway station 16. It is to be understood, however, that all of the frequencies, bandwidths and the like that are described herein are representative of but one particular system. Other frequencies and bands of frequencies may be used with no change in the principles being discussed. As but one example, the feeder links between the gateways and the satellites may use frequencies in a band other than the C-band (approximately 3 GHz to approximately 7 GHz), for example the Ku band (approximately 10 GHz to approximately 15 GHz) or the Ka band (above approximately 15 GHz).

As shown in Figure 1, the non-limiting mobile station 14 can be connected to a data network 30 over a communication link 32 such as an Ethernet link, Bluetooth based wireless link, or using a wireless transfer system based on 802.11 (IEEE) standards protocols. One or more user computers 34 can be coupled to data network 30. The present system also contemplates the use of handheld or laptop computers having wireless or wire line modems, PDAs, facsimile and other data transfer devices, including, but not limited to, gaming devices, paging devices, and so forth, that desire to transfer data to a user. In any case, the data network 30 can be a Local Area Network (LAN), or any other known network, and it can include data routers and can be connected to other networks.

As also shown in Figure 1, the gateway station 16 communicates with a gateway router 36 in accordance with principles known in the art, which in turn communicates with a ground controller 38 such as a satellite operations control center and/or ground operations control center. The ground controller 38 communicates with a network router 40, which in turn communicates with a packet data network exemplified by the Internet. Accordingly, the gateway station 16 communicates with the Internet, and the mobile station 14 communicates with the gateway station 16 and, hence, the Internet via the satellite 12 for exchanging packetized data in accordance with the logic below.

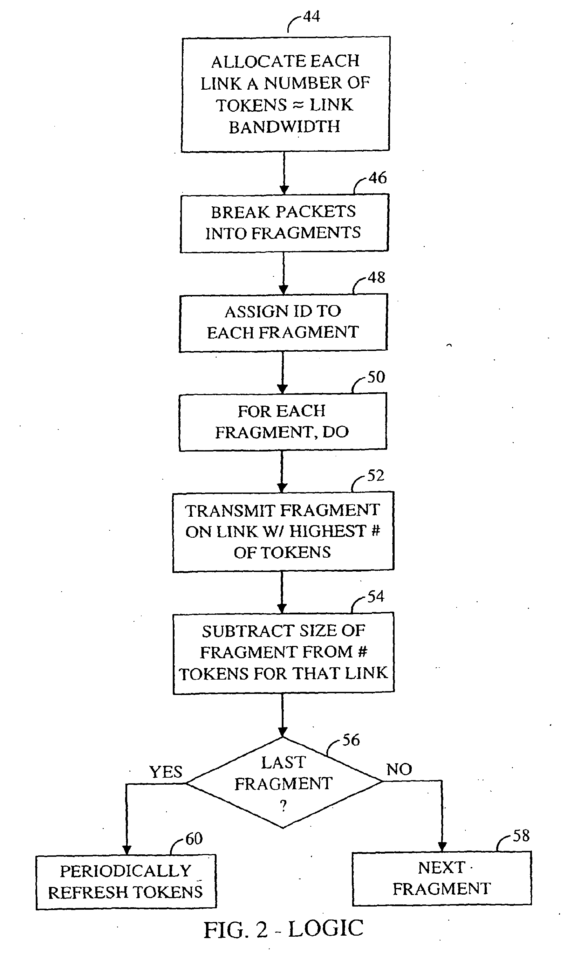

Now referring to Figure 2, the present logic can be seen. This logic may be executed by the mobile station 14 when transmitting packet data, or by the gateway station 16 when transmitting packet data, or by the satellite 12 when transmitting packet data.

Commencing at block 44, multiple links are established between the transmitter and receiver as set forth in, e.g., the above-referenced patent application, and then each link between the transmitter and receiver is assigned a capacity indicator indicating the amount of capacity available in the link at the time of indicator assignment. The present invention contemplates assigning "tokens" as capacity indicators but in general any indicator that is proportional to or otherwise indicates how much capacity the particular link has may be used.

Moving to block 46, packets of data received by the transmitter for transmission are broken into fragments. In one preferred non-limiting embodiment all fragments are of a predetermined size except the last fragment, which can be a fraction of the predetermined size, although the fragments may all have different sizes if desired. As contemplated in one preferred embodiment, the number of fragments per packet is equal to the number of available links. Typically, the packets, particularly IP packets, include destination information in their headers.

At block 48, a header containing an identification (ID) is assigned to each fragment indicating, among other things, the packet to which it belongs and its place in the packet. Then, at block 50 a DO loop is entered for each fragment. Proceeding to block 52, the fragment is transmitted on the link having the highest number of tokens, i.e., the fragment is assigned to and transmitted on the link that has the highest capacity. If two or more links each have the same capacity and that capacity is the highest among all the links as indicated by the tokens, the fragment can be assigned to the first one of such links or it can be assigned at random to one of the highest capacity links. Since the assigned fragment now consumes some of the link's capacity, to reflect this change in capacity at block 54 the size of the fragment is subtracted from the tokens allocated to that link. That is, at block 54 the capacity indicator of the link is decreased according to the size of the assigned fragment.

Moving from block 54 to decision diamond 56, it is determined whether the last fragment has been assigned, and if not the next fragment is retrieved at block 58 and the above process repeated for that fragment. Otherwise the DO loop ends with the fragments of a packet having been transmitted over their respective links. Block 60 indicates that periodically the number of tokens assigned to the links are refreshed. For instance, once the link resumes an idle state, its capacity indicators (e.g., tokens) are replenished, indicating its current capacity.

At the receiver, it is possible that fragments are received out of order. If so, the receiver uses the fragment ID information to reconstruct the packets. The receiver also sequences the reconstructed packets in the predetermined sequence order based on the identifying information. The reconstructed packets are forwarded as appropriate in the correct sequence order.

In an exemplary arrangement of the present invention, each of the links has a data transmission bandwidth of approximately 9.6 Kilobits-persecond (Kbps). In the exemplary arrangement, up to twenty-four satellite modems or transceiver modules 20, and thus twenty-four links, operate concurrently, thereby achieving an aggregated transmission bandwidth of approximately 230 Kbps (24 x 9.6 Kbps = 230.4 Kbps). More or less links may be aggregated to achieve correspondingly different data transmission bandwidths.

The fragments are processed in accordance with a link layer protocol, such as PPP, for example, in which case the transmitter appends a link layer protocol header (for example, a PPP header) to each of the packet fragments. If desired, the various headers that are appended to the fragments may be compressed to reduce the size of the packet fragments, and thus conserve data transmission bandwidth.

For the exemplary CDMA based satellite system 10 shown in Figure 1 the forward link uses code channels on the FDM channels or sub-beams to distinguish users while on the reverse link user specific codes and an M-ARY modulation scheme are used on the sub-beams to distinguish users. It is to be understood, however, that the invention should not necessarily be so limited. For example, the present invention may be used with multiple, terrestrial-based, wireless or wireline communication channels, such as CDMA cellular or Personal Communications Services (PCS) communication channels, to achieve high data rate transfers. In an exemplary terrestrial-based application of the present invention, a mobile station 14 may reside in a land-base vehicle, such as an automobile, and include a plurality of concurrently operating CDMA cellular/PCS modems or transceiver modules or elements instead of satellite modems. The mobile station 14 may exchange data with a cellular/PCS base station, including a plurality of concurrently operating CDMA cellular/PCS modems (instead of a satellite gateway), over a plurality of concurrently operating CDMA cellular/PCS communication channels.

While the particular SYSTEM AND METHOD FOR TOKEN-BASED PPP FRAGMENT SCHEDULING as herein shown and described in detail is fully capable of attaining the above-described objects of the invention, it is to be understood that it is the presently preferred embodiment of the present invention and is thus representative of the subject matter which is broadly contemplated by the present invention, that the scope of the present invention fully encompasses other embodiments which may become obvious to those skilled in the art, and that the scope of the present invention is accordingly to be limited by nothing other than the appended claims, in which reference to an element in the singular is not intended to mean "one and only one" unless explicitly so stated, but rather "one or more". All structural and functional equivalents to the elements of the above-described preferred embodiment that are known or later come to be known to those of ordinary skill in the art are expressly incorporated herein by reference and are intended to be encompassed by the present claims. Moreover, it is not necessary for a device or method to address each and every problem sought to be solved by the present invention, for it to be encompassed by the present claims. Furthermore, no element, component, or method step in the present disclosure is intended to be dedicated to the public regardless of whether the element, component, or method step is explicitly recited in the claims. No claim element herein is to be construed under the provisions of 35 U.S.C. '112, sixth paragraph, unless the element is expressly recited using the phrase "means for" or, in the case of a method claim, the element is recited as a "step" instead of an "act".

## Claims

1. A method for communicating data arranged in packets, comprising:
providing plural links between a transmitter and a receiver;
allocating at least one capacity indicator to each link;
partitioning each packet into plural fragments, wherein a number of the plural fragments is equal to a number of available links among the plural links;
using the capacity indicators, associating each of the plurality of fragments with a link having a highest available capacity as indicated by tokens; and
transmitting the plural of fragments of a packet in parallel over the available links among the plurality links.

2. The method of Claim 1, comprising subtracting an amount representative of a size of a fragment from a number of tokens allocated to the link when the fragment has been assigned to the link.

3. The method of Claim 1, further comprising assigning at least one identification to each fragment to enable reconstruction of the packet.

4. The method of Claim 1, comprising reconstituting the fragments at the receiver, based on at least one identification assigned to each fragment, to reconstruct the packet.

5. The method of Claim 1, comprising transmitting the fragments of a packet in parallel over the links.

6. The method of Claim 1, wherein the packets are encapsulated in PPP.

7. The method of Claim 1, further comprising assigning the tokens to the links, the tokens being representative of the capacities of the respective links.

8. The method of Claim 1, wherein the plural links comprise wireless links.

9. A system for packetized data transmission, comprising:
means for partitioning data packets into fragments, wherein a number of fragments is equal to a number of plural links;
means for scheduling the fragments among the plural links based on current capacities of the links such that the fragments of a packet are transmittable in parallel over the plural links; and
wherein the means for scheduling, for each fragment, associates the fragment to a link having a highest capacity as indicated by tokens.

10. The system of Claim 9, wherein at least the means for scheduling is implemented by at least one controller, wherein the controller assigns tokens to links, the tokens being representative of the capacities of the respective links.

11. The system of Claim 10, wherein the controller subtracts an amount representative of a size of a fragment from a number of tokens allocated to the link when the fragment has been assigned to the link.

12. The system of Claim 9, wherein the means for partitioning and the means for scheduling are implemented in a mobile station.

13. The system of Claim 9, wherein the means for partitioning and the means for scheduling are implemented in a gateway station.

14. The system of Claim 9, wherein the means for partitioning and the means for scheduling are implemented in a satellite.

15. The system of Claim 9, further comprising means for transmitting the fragments of a packet in parallel with each other over the links.

16. The system of Claim 9, wherein the plural links comprise wireless communication links.

17. The system of Claim 9, further comprising means for assigning at least one identification to each fragment to enable reconstruction of the packet.

18. The system of Claim 9, wherein the means for partitioning and the means for scheduling comprise a controller.

19. The system of Claim 18, wherein the controller is implemented in a mobile station.

20. The system of Claim 18, wherein the controller is implemented in a gateway station.

21. The system of Claim 18, wherein the controller is implemented in a satellite.

22. The system of Claim 18, wherein the controller assigns the tokens to links, the tokens being representative of the capacities of the respective links.

23. The system of Claim 22, wherein the controller subtracts an amount representative of a size of a fragment from a number of tokens allocated to the link when the fragment has been assigned to the link.

24. The system of Claim 18, wherein the controller transmits the fragments of a packet in parallel over the links.

25. The system of Claim 18, wherein the controller is further operable to assign at least one identification to each fragment to enable reconstruction of the packet.

26. A mobile station, comprising:
a controller for controlling at least one modem for communicating via plural links,
wherein the controller receives packets of data and partition the packets into fragments,
wherein a number of the fragments of a packet is equal to a number of available links among the plural links, each fragment being scheduled for transmission on one of the available links based on an allocation policy in accordance with available link capacity,
wherein the fragments of the packet are transmitted in parallel over the available links among the plural links; and
wherein the controller, for each fragment, associates the fragment to a link having a highest available capacity as indicated by tokens.

27. The mobile station of Claim 26, wherein the controller is further operable to assign the tokens to links, the tokens being representative of the capacities of the respective links.

28. The mobile station of Claim 27, wherein the controller is further operable to subtract an amount representative of a size of a fragment from a number of tokens allocated to the link when the fragment has been assigned to the link.

29. The mobile station of Claim 26, wherein the controller is further operable to transmit the fragments of a packet in parallel over the links.

30. The mobile station of Claim 26, wherein the plural links comprise wireless communication links.

31. The mobile station of Claim 26, wherein the controller is further operable to assign at least one identification to each fragment to enable reconstruction of the packet.

## Patentansprüche

1. Ein Verfahren zum Kommunizieren von in Paketen angeordneten Daten, aufweisend:
Bereitstellen von mehreren Verbindungen zwischen einem Sender und einem Empfänger;
Zuweisen von zumindest einem Kapazitätsindikator zu jeder Verbindung;
Partitionieren von jedem Paket in mehrere Fragmente, wobei eine Anzahl der mehreren Fragmente gleich ist mit einer Anzahl von verfügbaren Verbindungen aus den mehreren Verbindungen;
Unter Verwendung des Kapazitätsindikators, Assoziieren von jedem der Mehrzahl von Fragmenten mit einer Verbindung, welche die höchste verfügbare Kapazität hat, wie durch Token angezeigt; und
paralleles Senden der mehreren Fragmente eines Pakets über die verfügbaren Verbindungen aus der Mehrzahl von Verbindungen.

2. Das Verfahren nach Anspruch 1, aufweisend: Subtrahieren einer Anzahl, welche für eine Größe eines Fragments repräsentativ ist, von einer Anzahl von Tokens, welche zu der Verbindung zugewiesen sind, wenn das Fragment zu der Verbindung zugewiesen wurde.

3. Das Verfahren nach Anspruch 1, ferner aufweisend: Zuweisen von zumindest einer Identifikation zu jedem Fragment zum Ermöglichen einer Rekonstruktion des Pakets.

4. Das Verfahren nach Anspruch 1, aufweisend: Rekonstruieren der Fragmente bei dem Empfänger auf der Basis von zumindest einer Identifikation, welche jedem Fragment zugewiesen ist, zum Rekonstruieren des Pakets.

5. Das Verfahren nach Anspruch 1, aufweisend: paralleles Senden der Fragmente eines Pakets über die Verbindungen.

6. Das Verfahren nach Anspruch 1, wobei die Pakete in PPP gekapselt sind.

7. Das Verfahren nach Anspruch 1, ferner aufweisend: Zuweisen der Token zu den Verbindungen, wobei die Token für die Kapazitäten der entsprechenden Verbindungen repräsentativ sind.

8. Das Verfahren nach Anspruch 1, wobei die mehreren Verbindungen drahtlose Verbindungen aufweisen.

9. Ein System für paketierte Datenübertragung, aufweisend:
Mittel zum Partitionieren von Datenpaketen in Fragmente, wobei eine Anzahl von Fragmenten gleich ist mit einer Anzahl von mehreren Verbindungen;
Mittel zum Ablaufplanen der Fragmente über die mehreren Verbindungen auf der Basis von gegenwärtigen Kapazitäten der Verbindungen, sodass die Fragmente eines Pakets über die mehreren Verbindungen parallel übertragbar sind; und
wobei das Mittel zum Ablaufplanen für jedes Fragment das Fragment mit einer Verbindung assoziiert, welche die höchste verfügbare Kapazität hat, wie durch Token angezeigt.

10. Das System nach Anspruch 9, wobei zumindest das Mittel zum Ablaufplanen durch zumindest eine Steuereinheit implementiert ist, wobei die Steuereinheit Tokens zu den Verbindungen zuweist, wobei die Token für die Kapazitäten der entsprechenden Verbindungen repräsentativ sind.

11. Das System nach Anspruch 10, wobei die Steuereinheit eine Anzahl, welche für eine Größe eines Fragments repräsentativ ist, von einer Anzahl von Tokens, welche zu der Verbindung zugewiesen sind, subtrahiert, wenn das Fragment zu der Verbindung zugewiesen wurde.

12. Das System nach Anspruch 9, wobei das Mittel zum Partitionieren und das Mittel zum Ablaufplanen in einer mobilen Station implementiert sind.

13. Das System nach Anspruch 9, wobei das Mittel zum Partitionieren und das Mittel zum Ablaufplanen in einer Gatewaystation implementiert sind.

14. Das System nach Anspruch 9, wobei das Mittel zum Partitionieren und das Mittel zum Ablaufplanen in einem Satelliten implementiert sind.

15. Das System nach Anspruch 9, ferner aufweisend: Mittel zum Senden der Fragmente eines Pakets parallel miteinander über die Verbindungen.

16. Das System nach Anspruch 9, wobei die mehreren Verbindungen drahtlose Kommunikationsverbindungen aufweisen.

17. Das System nach Anspruch 9, ferner aufweisend: Mittel zum Zuweisen von zumindest einer Identifikation zu jedem Fragment zum Ermöglichen einer Rekonstruktion des Pakets.

18. Das System nach Anspruch 9, wobei das Mittel zum Partitionieren und das Mittel zum Ablaufplanen eine Steuereinheit aufweisen.

19. Das System nach Anspruch 18, wobei die Steuereinheit in einer mobilen Station implementiert ist.

20. Das System nach Anspruch 18, wobei die Steuereinheit in einer Gatewaystation implementiert ist.

21. Das System nach Anspruch 18, wobei die Steuereinheit in einem Satelliten implementiert ist.

22. Das System nach Anspruch 18, wobei die Steuereinheit die Token zu Verbindungen zuweist, wobei die Token für die Kapazitäten der entsprechenden Verbindungen repräsentativ sind.

23. Das System nach Anspruch 22, wobei die Steuereinheit eine Anzahl, welche für eine Größe eines Fragments repräsentativ ist, von einer Anzahl von Tokens, welche zu der Verbindung zugewiesen sind, subtrahiert, wenn das Fragment zu der Verbindung zugewiesen wurde.

24. Das System nach Anspruch 18, wobei die Steuereinheit die Fragmente eines Pakets parallel über die Verbindungen sendet.

25. Das System nach Anspruch 18, wobei die Steuereinheit ferner ausgebildet ist zum Zuweisen von zumindest einer Identifikation zu jedem Fragment zum Ermöglichen einer Rekonstruktion des Pakets.

26. Eine mobile Station, aufweisend:
eine Steuereinheit zum Steuern von zumindest einem Modem zum Kommunizieren über mehrere Verbindungen,
wobei die Steuereinheit Datenpakete empfängt und die Pakete in Fragmente partitioniert,
wobei eine Anzahl der Fragmente eines Pakets gleich ist mit einer Anzahl von verfügbaren Verbindungen aus den mehreren Verbindungen, wobei jedes Fragment für eine Übertragung auf einer der verfügbaren Verbindungen ablaufgeplant ist auf der Basis einer Zuweisungsregel gemäß der verfügbaren Verbindungskapazität,
wobei die Fragmente des Pakets parallel über die verfügbaren Verbindungen aus den mehreren Verbindungen übertragen werden; und
wobei die Steuereinheit für jedes Fragment das Fragment mit einer Verbindung assoziiert, welche die höchste verfügbare Kapazität hat, wie durch Token angezeigt.

27. Die mobile Station nach Anspruch 26, wobei die Steuereinheit ferner ausgebildet ist zum Zuweisen der Tokens zu Verbindungen, wobei die Token für die Kapazitäten der entsprechenden Verbindungen repräsentativ sind.

28. Die mobile Station nach Anspruch 27, wobei die Steuereinheit ferner ausgebildet ist zum Subtrahieren einer Anzahl, welche für eine Größe eines Fragments repräsentativ ist, von einer Anzahl von Tokens, welche zu der Verbindung zugewiesen sind, wenn das Fragment zu der Verbindung zugewiesen wurde.

29. Die mobile Station nach Anspruch 26, wobei die Steuereinheit ferner ausgebildet ist zum parallelen Senden der Fragmente eines Pakets über die Verbindungen.

30. Die mobile Station nach Anspruch 26, wobei die mehreren Verbindungen drahtlose Kommunikationsverbindungen aufweisen.

31. Die mobile Station nach Anspruch 26, wobei die Steuereinheit ferner ausgebildet ist zum Zuweisen von zumindest einer Identifikation zu jedem Fragment zum Ermöglichen einer Rekonstruktion des Pakets.

## Revendications

1. Un procédé de communication de données configurées en paquets, comprenant :
l'obtention d'une pluralité de liaisons entre un émetteur et un récepteur ;
l'allocation d'au moins un indicateur de capacité à chaque liaison ;
le partitionnement de chaque paquet en une pluralité de fragments, un nombre des fragments de la pluralité étant égal à un nombre de liaisons disponibles parmi la pluralité de liaisons ;
l'utilisation des indicateurs de capacité, associant chaque fragment de la pluralité de fragments à une liaison présentant une capacité disponible la plus élevée telle qu'indiquée par des jetons ; et
l'émission de la pluralité de fragments d'un paquet en parallèle sur les liaisons disponibles parmi la pluralité de liaisons.

2. Le procédé de la revendication 1, comprenant la soustraction d'une taille représentative d'une dimension d'un fragment à partir d'un nombre de jetons alloués à la liaison lorsque le fragment a été affecté à la liaison.

3. Le procédé de la revendication 1, comprenant en outre l'affectation d'au moins une identification à chaque fragment pour permettre la reconstruction du paquet.

4. Le procédé de la revendication 1, comprenant la reconstitution des fragments par le récepteur, sur la base d'au moins une identification affectée à chaque fragment, pour reconstruire le paquet.

5. Le procédé de la revendication 1, comprenant l'émission des fragments d'un paquet en parallèle sur les liaisons.

6. Le procédé de la revendication 1, dans lequel les paquets sont encapsulés en PPP.

7. Le procédé de la revendication 1, comprenant en outre l'affectation des jetons aux liaisons, les jetons étant représentatifs des capacités des liaisons respectives.

8. Le procédé de la revendication 1, dans lequel la pluralité de liaisons comprend des liaisons sans fil.

9. Un système de transmission de données paquétisées, comprenant :
des moyens de partitionnement de paquets de données en fragments, un nombre de fragments étant égal à un nombre d'une pluralité de liaisons ;
des moyens de planification des fragments entre la pluralité de liaisons sur la base de capacité courante des liaisons de sorte que les fragments d'un paquet puissent être transmis en parallèle sur la pluralité de liaisons ; et
dans lequel les moyens de planification, pour chaque fragment, associent le fragment à une liaison présentant la capacité la plus élevée telle qu'indiquée par des jetons.

10. Le système de la revendication 9, dans lequel au moins les moyens de planification sont implémentés par au moins un contrôleur, le contrôleur affectant les jetons aux liaisons, les jetons étant représentatifs des capacités des liaisons respectives.

11. Le système de la revendication 10, dans lequel le contrôleur soustrait une quantité représentative d'une taille d'un fragment d'un nombre de jetons alloués à la liaison lorsque le fragment a été affecté à la liaison.

12. Le système de la revendication 9, dans lequel les moyens de partitionnement et les moyens de planification sont implémentés dans une station mobile.

13. Le système de la revendication 9, dans lequel les moyens de partitionnement et les moyens de planification sont implémentés dans une station passerelle.

14. Le système de la revendication 9, dans lequel les moyens de partitionnement et les moyens de planification sont implémentés dans un satellite.

15. Le système de la revendication 9, comprenant en outre des moyens de transmission des fragments d'un paquet en parallèle les uns avec les autres sur les liaisons.

16. Le système de la revendication 9, dans lequel la pluralité de liaisons comprend des liaisons de communication sans fil.

17. Le système de la revendication 9, comprenant en outre des moyens d'affectation d'au moins une identification à chaque fragment pour permettre la reconstruction du paquet.

18. Le système de la revendication 9, dans lequel les moyens de partitionnement et les moyens de planification comprennent un contrôleur.

19. Le système de la revendication 18, dans lequel le contrôleur est implémenté dans une station mobile.

20. Le système de la revendication 18, dans lequel le contrôleur est implémenté dans une station passerelle.

21. Le système de la revendication 18, dans lequel le contrôleur est implémenté dans un satellite.

22. Le système de la revendication 18, dans lequel le contrôleur affecte les jetons à des liaisons, les jetons étant représentatifs des capacités des liaisons respectives.

23. Le système de la revendication 22, dans lequel le contrôleur soustrait une quantité représentative d'une taille d'un fragment d'un nombre de jetons alloués à la liaison lorsque le fragment a été affecté à la liaison.

24. Le système de la revendication 18, dans lequel le contrôleur transmet les fragments d'un paquet en parallèle sur les liaisons.

25. Le système de la revendication 18, dans lequel le contrôleur peut être en outre mis en oeuvre pour affecter au moins une identification à chaque fragment pour permettre la reconstruction du paquet.

26. Une station mobile, comprenant :
un contrôleur pour contrôler au moins un modem pour communiquer via une pluralité de liaisons,
dans laquelle le contrôleur reçoit des paquets de données et partitionne les paquets en fragments,
dans laquelle un nombre des fragments d'un paquet est égal à un nombre de liaisons disponibles parmi la pluralité de liaisons, chaque fragment étant planifié pour transmission sur l'une des liaisons disponibles sur la base d'une politique d'allocation en conformité avec la capacité de liaisons disponibles,
dans laquelle les fragments du paquet sont transmis en parallèle sur les liaisons disponibles parmi la pluralité de liaisons ; et
dans laquelle le contrôleur, pour chaque fragment, associe le fragment à une liaison présentant une capacité disponible la plus élevée telle qu'indiquée par des jetons.

27. La station mobile de la revendication 26, dans laquelle le contrôleur peut être en outre mis en oeuvre pour affecter les jetons à des liaisons, les jetons étant représentatifs des capacités des liaisons respectives.

28. La station mobile de la revendication 27, dans laquelle le contrôleur peut être en outre mis en oeuvre pour soustraire une quantité représentative d'une taille d'un fragment d'un nombre de jetons alloués à la liaison lorsque le fragment a été affecté à la liaison.

29. La station mobile de la revendication 26, dans laquelle le contrôleur peut être en outre mis en oeuvre pour transmettre les fragments d'un paquet en parallèle sur les liaisons.

30. La station mobile de la revendication 26, dans laquelle la pluralité de liaisons comprend des liaisons de communication sans fil.

31. La station mobile de la revendication 26, dans laquelle le contrôleur peut être en outre mis en oeuvre pour affecter au moins une identification à chaque fragment pour permettre la reconstruction du paquet.
